(19) **Europäisches Patentamt
European Patent Office
Office européen des brevets**

(11) **EP 4 374 514 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **22747938.3**

(22) Anmeldetag: **27.06.2022**

(51) Internationale Patentklassifikation (IPC):
***H04J 3/06*** (2006.01)

(52) Gemeinsame Patentklassifikation (CPC):
**H04W 56/0015; H04B 1/7183;** H04B 2201/71634

(86) Internationale Anmeldenummer:
**PCT/DE2022/200142**

(87) Internationale Veröffentlichungsnummer:
**WO 2023/001342 (26.01.2023 Gazette 2023/04)**

(54) **VERFAHREN ZUR WEITERGABE EINER SYNCHRONISATIONSINFORMATION IN EINER KOMMUNIKATIONSVORRICHTUNG, KOMMUNIKATIONSVORRICHTUNG UND FAHRZEUG**

METHOD FOR FORWARDING SYNCHRONIZATION INFORMATION IN A COMMUNICATION DEVICE, COMMUNICATION DEVICE AND VEHICLE

PROCÉDÉ DE TRANSFERT D'INFORMATIONS DE SYNCHRONISATION DANS UN DISPOSITIF DE COMMUNICATION, DISPOSITIF DE COMMUNICATION ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2021 DE 102021207759**

(43) Veröffentlichungstag der Anmeldung:
**29.05.2024 Patentblatt 2024/22**

(73) Patentinhaber: **Continental Automotive Technologies GmbH
30175 Hannover (DE)**

(72) Erfinder:
• **REISINGER, Thomas
81739 München (DE)**
• **EMMERLING, Ulrich
81739 München (DE)**

(74) Vertreter: **Continental Corporation
c/o Continental Automotive Technologies GmbH
Intellectual Property
Putzbrunnerstr. 69
81739 München (DE)**

(56) Entgegenhaltungen:
**CN-B- 109 981 206    US-A1- 2007 014 339**

• **GRIESSBACH R ET AL: "byteflight- neues Hochleistung-Datenbussystem für sicherheitrelevante Anwendungen", INTERNET CITATION, 1 January 2000 (2000-01-01), XP002356167, Retrieved from the Internet <URL:http://www.byteflight.com/> [retrieved on 20051128]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Weitergabe einer Synchronisationsinformation in einer Kommunikationsvorrichtung, welche zumindest zwei Sende-Empfängereinheiten aufweist. Die Erfindung umfasst auch eine Kommunikationsvorrichtung, welche zumindest zwei Sende-Empfängereinheiten aufweist und ein Fahrzeug, das eine Kommunikationsvorrichtung aufweist.

Verriegelungssysteme in Fahrzeugen weisen nach dem derzeitigen Stand der Technik vermehrt Kommunikationsvorrichtungen auf, welche dazu eingerichtet sind, ein Entriegeln beziehungsweise ein Verriegeln eines Fahrzeugs über Funksignale zu ermöglichen. Die Kommunikationsvorrichtungen verwenden hierfür in der Regel die Ultrabreitband-Technologie UWB. Zum Entriegeln beziehungsweise zum Verriegeln des Fahrzeugs über Funk kommuniziert die Kommunikationsvorrichtung mit einer Geräteeinheit, die ein Fahrer des Fahrzeugs mit sich führt. Die Geräteeinheit kann beispielsweise ein Funkschlüssel oder ein Smartphone mit einer UWB-Schnittstelle sein. Es ist verbreitet, dass ein Entriegeln oder Verriegeln von Fahrzeugen nur von vorbestimmten Positionen in Bezug auf ein jeweiliges Fahrzeug möglich ist. Es kann beispielsweise vorgesehen sein, dass sich die Geräteeinheit in einem vorbestimmten Bereich vor einer Tür des Fahrzeugs befinden muss.

Um ein Entriegeln oder Verriegeln in Abhängigkeit von einer Position der Geräteeinheit in Bezug auf das Fahrzeug zu ermöglichen, ist es verbreitet, dass die Position der Geräteeinheit über UWB-Signale durch die Kommunikationsvorrichtung geortet wird. Die Ortung der Geräteeinheit erfolgt gewöhnlicherweise über eine Laufzeitbestimmung der UWB-Signale, welche zwischen der Kommunikationsvorrichtung und der Geräteeinheit ausgetauscht werden. Um die Position der Geräteeinheit über Laufzeitbestimmungen ermitteln zu können weist die Kommunikationsvorrichtung mehrere Sende-Empfängereinheiten auf, welche auch als Anker bezeichnet werden. Diese Sende-Empfängereinheiten sind an unterschiedlichen Positionen am Fahrzeug angeordnet. Durch eine Erfassung der Laufzeiten zwischen der Geräteeinheit und den jeweiligen Sende-Empfängereinheiten ist es möglich, die genaue Position der Geräteeinheit zu ermitteln.

Um einen Energieverbrauch der Geräteeinheit und der Kommunikationsvorrichtung minimieren zu können, ist es üblich, den einzelnen Sende-Empfängereinheiten vorbestimmte Zeitfenster zuzuweisen, in denen die Sende-Empfängereinheiten auf Empfang gestellt sind und UWB-Funksignale empfangen können. Außerhalb der Zeitfenster sind die Sende-Empfängereinheiten nicht auf Empfang gestellt und können keine UWB-Funksignale empfangen. Diese Zeitfenster sind durch ein Abstandsmessungszeitraster definiert, dass durch die Geräteeinheit vorgegeben ist, wobei jedem der Sende-Empfängereinheiten eine jeweiliger Zeitslot in dem Abstandsmessungszeitraster zugeordnet ist. Dadurch, dass die UWB-Signale nur innerhalb des zugewiesenen Zeitfensters durch die jeweilige Sende-Empfängereinheit empfangen werden können ist es erforderlich, dass eine genaue zeitliche Synchronisation zwischen der Geräteeinheit und den einzelnen Sende-Empfängereinheiten erfolgt.

Diese Synchronisation ist erforderlich, weil die Geräteeinheit und die einzelnen Sende-Empfängereinheiten der Kommunikationsvorrichtung sich in unterschiedlichen Zeitzonen befinden. Die Zeitzonen werden dabei für die Geräteeinheit durch die Geräteuhr, und für die Sende-Empfängereinheiten durch eine Geräteuhr der Kommunikationsvorrichtung vorgegeben. Die Uhren umfassen in der Regel einen jeweiligen Schwingquarz. Zu Abweichung zwischen den Zeitzonen kann es aufgrund von Laufzeitunterschieden zwischen den Geräteuhren kommen, die auf die verschiedenen Quarzkristalle zurückzuführen sind. Damit eine Synchronisation über einen Zeitraum sichergestellt werde kann, ist es erforderlich, Synchronisationsinformationen, welche die Zeitzone der Geräteeinheit mit der Zeitzone der Sende-Empfängereinheiten miteinander verknüpfen regelmäßig zu aktualisieren und an die einzelnen Sende-Empfängereinheiten weiterzugeben. Ein Beispiel für den Stand der Technik ist US 2007/014339.

Es ist somit eine Aufgabe der Erfindung, ein Verfahren bereitzustellen, welches eine Synchronisation mittels Weitergabe einer Synchronisationsinformation in der Kommunikationsvorrichtung ermöglicht.

Ein erster Aspekt der Erfindung betrifft ein Verfahren zur Weitergabe einer Synchronisationsinformation in einer Kommunikationsvorrichtung, welche zumindest zwei Sende-Empfängereinheiten aufweist. Bei der Kommunikationsvorrichtung kann es sich insbesondere um eine Kommunikationsvorrichtung zum Senden und Empfangen von UWB-Funksignalen handeln. Die Kommunikationsvorrichtung kann dazu vorgesehen sein, die UWB- Funksignale zu versenden und/oder zu empfangen, um ein funkbasiertes Sperren und Öffnen einer Verriegelungseinrichtung eines Fahrzeugs zu ermöglichen. Die zumindest zwei Sende-Empfängereinheiten können an unterschiedlichen Orten an dem Fahrzeug angeordnet zu sein. Die Sende-Empfängereinheiten können dazu vorgesehen sein, die UWB-Funksignale von einer externen Geräteeinheit, wobei es sich beispielsweise um ein Mobiltelefon oder einen Funkschlüssel handeln kann, zu empfangen und aus einer Signalstärke und/oder einer Laufzeit der UWB- Funksignale einen Abstand zwischen der jeweiligen Sende-Empfängereinheit zu der Geräteeinheit zu ermitteln. Die Kommunikationsvorrichtung kann dazu vorgesehen sein, in einer vorbestimmten Abstandsmessungssitzung aus den erfassten Laufzeiten und/oder den erfassten Signalstärken an den Sende-Empfängereinheiten der UWB-Funksignale eine Position der Geräteeinheit zu ermitteln. Diese Abstandsmessungssitzung wird wiederholt durchgeführt. In dem Verfahren ist es vorgesehen, dass dabei die zumindest zwei Sende-Empfängereinheiten durch ein vorbestimmtes Synchronisationsverfahren mit einer Vorrichtungsuhr der Kommunikationsvorrichtung auf eine Vorrichtungszeitzone synchronisiert werden. Mit anderen Worten ist es vorgesehen, dass die zumindest zwei Sende-Empfängereinheiten auf eine durch die Vorrichtungsuhr vorgegebene Vorrichtungszeitzone synchronisiert werden. Bei der Vorrichtungsuhr kann es sich beispielsweise um eine Einrichtung handeln, welche einen Schwingquarz aufweist. Es ist vorgesehen, dass durch eine der Sende-Empfängereinheiten in der vorbestimmten Abstandsmessungssitzung ein Zeitsignal einer externen Geräteeinheit empfangen wird, welches einen Geräteuhrenstand der Geräteeinheit zu einem Referenzzeitpunkt in einer Gerätezeitzone umfasst. Mit anderen Worten ist es vorgesehen, dass eine der Sende-Empfängereinheiten in der vorbestimmten Abstandsmessungssitzung zum Bestimmen eines Abstandes zwischen der Sende-Empfängereinheit und der Geräteeinheit das Zeitsignal empfängt, in welchem offenbart ist, welchen Geräteuhrenstand in der Gerätezeitzone die Geräteeinheit zu einem vorbestimmten Referenzzeitpunkt aufweist.

In dem Verfahren ist es vorgesehen, dass zu jeder Abstandsmesssitzung durch die empfangende Sende-Empfängereinheit ein Synchronisationsdatensatz generiert wird, der eine Zeitrelation zwischen einem Vorrichtungsuhrenstand zu dem Referenzzeitpunkt in der Vorrichtungszeitzone und dem Geräteuhrenstand zu dem Referenzzeitpunkt in der Gerätezeitzone beschreibt. Mit anderen Worten ist es vorgesehen, dass durch die Sende-Empfängereinheit, welche das Zeitsignal empfängt, der jeweils aktuelle Synchronisationsdatensatz ermittelt wird. Der Synchronisationsdatensatz beschreibt die Zeitrelation zwischen dem Vorrichtungsuhrenstand und dem Geräteuhrenstand zu dem Referenzzeitpunkt. Dadurch ist eine Beziehung zwischen der Gerätezeitzone und der Vorrichtungszeitzone bestimmt.

Durch die empfangende Sende-Empfängereinheit wird eine Synchronisationssitzung initiiert, wobei durch die empfangende Sende-Empfängereinheit ein Synchronisationsraster definiert wird, welches einen sich periodisch wiederholenden Synchronisationsblock aufweist, der eine Sitzungsrunde aufweist. Es ist vorgesehen, dass durch die empfangende Sende-Empfängereinheit eine Synchronisationssitzung initiiert wird. Mit anderen Worten ist es vorgesehen, dass zeitlich parallel zu der Abstandsmessungssitzung eine Synchronisationssitzung durch die empfangende Sende-Empfängereinheit gestartet wird, welche dazu vorgesehen ist, eine regelmäßige Übersendung des jeweils aktuelle Synchronisationsdatensatzes zur Synchronisation der Sende-Empfängereinheiten zu ermöglichen. Dabei wird durch die empfangende Sende-Empfängereinheit ein Synchronisationszeitraster definiert, welches einen sich periodisch wiederholenden Synchronisationsblock aufweist. Die Synchronisationssitzung weist somit ein eigenes Synchronisationszeitraster auf, das von einem Abstandsmessungszeitraster der Abstandsmessungssitzung verschieden ist. Der Synchronisationsblock wiederholt sich periodisch und weist die Sitzungsrunde auf. Während vorbestimmter Sitzungsslots der Sitzungsrunde des sich periodisch wiederholenden Synchronisationsblocks wird der Synchronisationsdatensatz an die anderen der Sende-Empfängereinheiten übertragen. Mit anderen Worten ist es vorgesehen, dass eine regelmäßige Übermittlung von Synchronisationsdatensätzen durch die Sende-Empfängereinheit erfolgt. Dabei wird der Synchronisationsdatensatz in einem vorbestimmten Sitzungsslot der Sitzungsrunde an die andere der Sende-Empfängereinheiten übertragen. Die Sende-Empfängereinheiten sind dazu eingerichtet, in den Sitzungsrunden und/oder den Sitzungsslots zum Empfang und/oder Versand des Synchronisationsdatensatzes eingestellt zu sein. In der Übrigens Zeit kann der Empfang und/oder der Versand des Synchronisationsdatensatzes deaktiviert sein. Durch die Erfindung ergibt sich der Vorteil, dass zur Synchronisation der Sende-Empfängereinheiten eine eigene Synchronisationssitzung eingerichtet wird, welche unabhängig von der Abstandsmessungssitzung ist. Vorteilhaft ist dabei insbesondere, dass eine Dauer der Sitzungsslots der Abstandsmessungssitzung nicht durch die Übertragung des Synchronisationsdatensatzes verlängert wird.

Die Erfindung umfasst auch Weiterbildungen, durch die sich weitere Vorteile ergeben.

Eine Weiterbildung der Erfindung sieht vor, dass die zumindest eine weitere der Sende-Empfängereinheiten durch die empfangende Sende-Empfängereinheit bei der Einleitung der Synchronisationssitzung auf einen Empfangsmodus gesetzt wird, um den Synchronisationsdatensatz zu empfangen. Mit anderen Worten ist es vorgesehen, dass die andere der Sende-Empfängereinheiten zu Beginn der Synchronisationssitzung auf den Empfangsmodus gesetzt wird, in welchem die zumindest eine weitere der Sende-Empfängereinheiten zeitlich durchgehend zum Empfang des Synchronisationsdatensatzes eingerichtet ist. Das Versetzen der Sende-Empfängereinheiten in den Empfangsmodus kann durch eine Übertragung eines vorbestimmten Signals erfolgen. Die andere der Sende-Empfängereinheiten kann somit während des gesamten Empfangsmodus durchgängig den ersten Synchronisationsdatensatz empfangen. Durch die empfangende der Sende-Empfängereinheiten wird der Synchronisationsdatensatz in dem vorbestimmten Sitzungsslot der Sitzungsrunde des sich periodisch wiederholenden Synchronisationsblocks an die andere der Sende-Empfängereinheiten versandt. Die andere der Sende-Empfängereinheiten empfängt den Synchronisationsdatensatz und leitet nach einem vorbestimmten Abstimmungsverfahren aus dem vorbestimmten Sitzungsslot das Synchronisationszeitraster ab. Mit anderen Worten ist es vorgesehen, dass die andere der Sende-Empfängereinheiten im Empfangsmodus den Synchronisationsdatensatz durch die empfangende der Sende-Empfängereinheiten empfängt. Aus einem Zeitpunkt des Empfangs kann die andere der Sende-Empfängereinheiten das Synchronisationszeitraster bestimmen, welches in der Synchronisationssitzung angewandt wird. Dadurch ist der anderen der Sende-Empfängereinheiten übermittelt, wie das Synchronisationszeitraster aufgebaut ist und welcher vorbestimmte Sitzungsslot ihr zugewiesen ist. Durch das Synchronisationszeitraster kann die andere der Sende-Empfängereinheiten den Zeitpunkt ermitteln, zu welchem die nächste Sitzungsrunde des Synchronisationszeitrasters beginnt. Durch die Erweiterung ergibt sich der Vorteil, dass das Synchronisationszeitraster durch eine Übermittlung eines einfachen Signals an die andere der Sende-Empfängereinheiten übertragen werden kann.

Eine Weiterbildung der Erfindung sieht vor, dass durch die zumindest eine weitere der Sende-Empfängereinheiten nach dem Empfang des ersten Synchronisationsdatensatzes der Empfangsmodus deaktiviert wird und in einer nächsten Sitzungsrunde des sich periodisch wiederholenden Sitzungsblocks aktiviert wird. Mit anderen Worten ist es vorgesehen, dass der Empfangsmodus der weiteren der Sende-Empfängereinheiten deaktiviert wird, sobald diese den ersten Synchronisationsdatensatz empfangen hat. Dies ist möglich, da ihr durch den Zeitpunkt des Empfangs des ersten Synchronisationsdatensatzes das Synchronisationszeitraster übermittelt wurde. Sie kann dadurch ableiten, zu welchem Zeitpunkt des nächsten Sitzungsblocks der weitere Synchronisationsdatensatz übermittelt wird. Um Energie zu sparen wird der Empfangsmodus erst in einer nächsten Sitzungsrunde des sich periodisch wiederholenden Sitzungsblocks aktiviert. Dadurch ergibt sich der Vorteil, dass die weiteren Synchronisationsdatensätze empfangen werden können, ohne dass ein durchgängiger Empfangsmodus freigeschaltet sein muss.

Eine Weiterbildung der Erfindung sieht vor, dass durch eine der Sende-Empfängereinheiten ein jeweils weiteres Zeitsignal einer weiteren externen Geräteeinheit empfangen wird, welches den jeweiligen Geräteuhrenstand der jeweiligen weiteren Geräteeinrichtung zu einem jeweiligen weiteren Referenzzeitpunkt in der Gerätezeitzone umfasst. Dabei ist es vorgesehen, dass durch die Sende-Empfängereinheit ein jeweiliger weiterer Synchronisationsdatensatz generiert wird, der eine jeweilige Zeitrelation zwischen dem Vorrichtungsuhrenstand zu dem jeweiligen weiteren Referenzzeitpunkt in der Vorrichtungszeitzone und dem jeweiligen weiteren Geräteuhrenstand zu dem jeweiligen weiteren Referenzzeitpunkt in der jeweiligen weiteren Gerätezeitzone beschreibt. Durch die Sende-Empfängereinheit wird in einem vorbestimmten jeweiligen weiteren Sitzungsslot der Sitzungsrunde des sich periodisch wiederholenden Synchronisationsblocks der Synchronisationsdatensatz an die anderen der Sende-Empfängereinheiten übertragen. Mit anderen Worten ist es vorgesehen, dass ein weiteres Zeitsignal durch eine der Sende-Empfängereinheiten empfangen wird. Dies weitere Zeitsignal kann wie das Zeitsignal der ersten Geräteeinheit den jeweiligen Geräteuhrenstand der weiteren Geräteeinrichtung zu einem weiteren Referenzzeitpunkt in der Gerätezeitzone beschreiben. Für die Gerätezeitzone der weiteren Geräteeinheit kann die Sende-Empfängereinheit einen weiteren Synchronisationsdatensatz generieren, welcher die jeweilige Zeitrelation zwischen dem Vorrichtungsuhrenstand zu dem jeweiligen weiteren Referenzzeitpunkt in der Vorrichtungszeitzone und dem jeweiligen weiteren Geräteuhrenstand beschreiben kann. Es ist möglich, dass der zusätzliche Synchronisationsdatensatz in der Synchronisationssitzung übertragen wird. Zu diesem Zweck wird zur Übermittlung des zusätzlichen Synchronisationsdatensatzes diesen in dem Synchronisationsraster ein eigener Sitzungsslot in der Sitzungsrunde zugewiesen. Es ist somit möglich, die Übertragung weiterer Synchronisationsdatensätze jeweiliger Sende-Empfängereinheiten zu ermöglichen, indem den weiteren Sende-Empfängereinheiten zur Übertragung der von ihnen generierten Synchronisationsdatensätze jeweilige Sitzungsslots in der Sitzungsrunde zugewiesen werden.

Eine Weiterbildung der Erfindung sieht vor, dass in dem Synchronisationsdatensatz der Geräteuhrenstand zu dem Referenzzeitpunkt in der Gerätezeitzone als Blockindex eines zu dem Referenzzeitpunkt beginnenden oder endenden Synchronisationsblocks der Abstandsmessungssitzung angegeben wird. Mit anderen Worten wird die Zeit des Referenzzeitpunktes in der Gerätezeitzone nicht durch einen Zeitwert angegeben, sondern durch den Index des Blocks, der zu dem Referenzzeitpunkt der Abstandsmessungssitzung beginnt oder endet. Dadurch ergibt sich der Vorteil, dass der Geräteuhrenstand durch einen Wert angegeben wird, welcher eine kleinere Größe aufweist als eine Uhrzeit. Die Zuordnung des Geräteuhrenstands zu einem Blockindex ist möglich, weil ein Abstandsmessungszeitraster der Abstandsmessungssitzung durch die Gerätezeitzone der Geräteeinheit vorgegeben ist.

Eine Weiterbildung der Erfindung sieht vor, dass der durch eine der Sende-Empfängereinheiten ausgesandte Synchronisationsdatensatz durch eine als Relay-Sende-Empfängereinheit wirkende Sende-Empfängereinheit der Sende-Empfängereinheiten empfangen wird und durch die als Relay-Sende-Empfängereinheit wirkende Sende-Empfängereinheit der Sende-Empfängereinheiten an die weitere der Sende-Empfängereinheiten versandt wird. Mit anderen Worten ist es vorgesehen, dass eine indirekte Übertragung des von einer Sende-Empfängereinheit ausgesandten Synchronisationsdatensatzes zu einer anderen der Sende-Empfängereinheiten über eine als Relay-Sende-Empfängereinheit wirkende Sende-Empfängereinheit erfolgen kann. Dadurch ergibt sich der Vorteil, dass der Sende-Empfängereinheit der Synchronisationsdatensatz auch zugestellt werden kann, wenn keine direkte Übertragung des Synchronisationsdatensatzes von der sendenden Sende-Empfängereinheit möglich ist. Eine direkte Übertragung zwischen zwei der Sende-Empfängereinheiten kann beispielsweise temporär oder dauerhaft unmöglich sein. Um trotzdem eine Übertragung des Synchronisationsdatensatzes zu ermöglichen, kann es vorgesehen sein, dass die Sende-Empfängereinheit, die den Synchronisationsdatensatz generiert hat, den Synchronisationsdatensatz in einem ersten Schritt an die Sende-Empfängereinheit versendet, die als Relay-Sende-Empfängereinheit wirken soll. Die Relay-Sende-Empfängereinheit wirkende Sende-Empfängereinheit kann in einem zweiten Schritt den von ihr empfangenen Synchronisationsdatensatz an die Sende-Empfängereinheit weiterleiten, welche den Synchronisationsdatensatz empfangen soll. Es kann auch vorgesehen sein, dass der Synchronisationsdatensatz über mehr als eine der Sende-Empfängereinheiten weitergeleitet wird. Eine Anzahl der Relay-Sende-Empfängereinheiten, welche den Datensatz weitergeleitet haben, kann als Wert eines Relayzählers angegeben sein.

Eine Weiterbildung der Erfindung sieht vor, dass der Synchronisationsdatensatz einen Alterswert aufweist, wobei durch den Alterswert eine Anzahl der Blöcke seit der Generierung des Synchronisationsdatensatzes beschrieben wird. Mit anderen Worten ist es vorgesehen, dass durch den Alterswert beschrieben wird, vor welcher Anzahl an Blöcken des Synchronisationszeitrasters der jeweilige Synchronisationsdatensatz generiert wurde. Durch die Weiterbildung ergibt sich der Vorteil, dass eine Zuverlässigkeit und/oder Aktualität des jeweiligen Synchronisationsdatensatzes ermittelt werden kann. Die Sende-Empfängereinheiten können dadurch beispielsweise eine Dauer der Zeiträume, in denen sie in dem Empfangsmodus sind, in Abhängigkeit von der Zuverlässigkeit und/oder die Aktualität des Synchronisationsdatensatzes anpassen. Es kann beispielsweise vorgesehen sein, dass ein Sicherheitszeitfenster, welches einen Zeitraum vor einem Zeitslot und/oder nach einem Zeitslot beschreibt, in welchem der Empfangsmodus zusätzlich aktiviert ist, eine Länge aufweist, welche abhängig ist von dem Alterswert des Synchronisationsdatensatzes. Dadurch kann beispielsweise ausgeglichen werden, dass eine Synchronisation, welche länger her ist, ungenauer ist als eine aktuelle Synchronisation.

Eine Weiterbildung der Erfindung sieht vor, dass ein erneuter Synchronisationsdatensatz durch eine der Sende-Empfängereinheiten empfangen wird und der Alterswert des erneuten Synchronisationsdatensatzes mit einem Alterswert eines in der Sende-Empfängereinheit gespeicherten Synchronisationsdatensatzes verglichen wird. Mit anderen Worten ist es vorgesehen, dass der empfangende oder generierte Synchronisationsdatensatz durch die Sende-Empfängereinheit gespeichert wird. Dieser Synchronisationsdatensatz weist den jeweiligen Alterswert auf. Wird durch die Sende-Empfängereinheit der erneute Synchronisationsdatensatz empfangen, wird der Alterswert des erneuten Synchronisationsdatensatzes mit dem Alterswert des gespeicherten Synchronisationsdatensatzes verglichen. Mit anderen Worten wird durch das Verfahren durch die Sende-Empfängereinheit bestimmt, welcher der ihr zur Verfügung stehenden Synchronisationsdatensätze, älter ist. Es ist vorgesehen, dass der in der Sende-Empfängereinheit gespeicherte Synchronisationsdatensatz durch den erneuten Synchronisationsdatensatz überschrieben wird, wenn der Alterswert des erneuten Synchronisationsdatensatzes in jüngeres Alter angibt, als der Alterswert des Synchronisationsdatensatzes. Mit anderen Worten wird der gespeicherte Synchronisationsdatensatz durch den erneuten Synchronisationsdatensatz überschrieben, falls der erneute Synchronisationsdatensatz jünger ist als der gespeicherte Synchronisationsdatensatz. Dadurch ergibt sich der Vorteil, dass ein gespeicherter Synchronisationsdatensatz nur durch einen erneuten Synchronisationsdatensatz überschrieben wird, wenn der erneute Synchronisationsdatensatz jünger ist als der gespeicherte Synchronisationsdatensatz. Dadurch kann sichergestellt werden, dass im Fall einer Weiterleitung eines älteren Synchronisationsdatensatzes über mehrere Relay-Sende-Empfängereinheiten ein Ersetzen eines jüngeren in der Sende-Empfängereinheit gespeicherten Datensatzes durch einen älteren Datensatz verhindert wird.

Ein zweiter Aspekt der Erfindung betrifft eine Kommunikationsvorrichtung, aufweisend zumindest zwei Sende-Empfängereinheiten. Bei der Kommunikationsvorrichtung kann es sich beispielsweise um eine Funkeinrichtung eines Verriegelungssystems eines Fahrzeugs handeln. Die zwei zumindest Sende-Empfängereinheiten können dazu eingerichtet sein, Funksignale während einer Abstandsmessungssitzung zu versenden und/oder zu empfangen, um einen Abstand zu einer Geräteeinheit zu ermitteln. Die Kommunikationsvorrichtung ist dazu eingerichtet, die zumindest zwei Sende-Empfängereinheiten durch ein vorbestimmtes Synchronisationsverfahren mit einer Vorrichtungsuhr der Kommunikationsvorrichtung auf eine Vorrichtungszeitzone zu synchronisieren. Mit anderen Worten ausgedrückt weist die Kommunikationsvorrichtung eine Vorrichtungsuhr auf, welche dazu eingerichtet ist, eine Vorrichtungszeitzone vorzugeben. Die Kommunikationsvorrichtung ist dazu eingerichtet, die zumindest zwei Sende-Empfängereinheiten mit der Vorrichtungsuhr zu synchronisieren, so dass die zwei Sende-Empfängereinheiten in der Vorrichtungszeitzone, welche durch die Vorrichtungsuhr vorgegeben ist, arbeiten. Die Kommunikationsvorrichtung ist dazu eingerichtet, durch eine der Sende-Empfängereinheiten in einer vorbestimmten Abstandsmessungssitzung ein Zeitsignal einer externen Geräteeinheit zu empfangen, welches einen Geräteuhrenstand der Geräteeinheit zu einem Referenzzeitpunkt in einer Gerätezeitzone umfasst. Mit anderen Worten ist es vorgesehen, dass die Sende-Empfängereinheit dazu eingerichtet ist, das vorbestimmte Abstandsmessungsverfahren in einer vorbestimmten Abstandsmessungssitzung durchzuführen, um einen Abstand der Sende-Empfängereinheit zu einer externen Geräteeinheit zu bestimmen. Bei der externen Geräteeinheit kann es sich beispielsweise um einen Funkschlüssel oder um ein Mobiltelefon handeln. Die Sende-Empfängereinheit ist dazu eingerichtet, das Zeitsignal, welches von der Geräteeinheit empfangen wurde, zu empfangen. Das Zeitsignal umfasst dabei einen Geräteuhrenstand einer Geräteuhr der Geräteeinheit zu einem Referenzzeitpunkt in der Gerätezeitzone. Mit anderen Worten weist das Zeitsignal einen Stand einer Geräteuhr der Geräteeinheit auf. Der Geräteuhrenstand wurde zu einem Referenzzeitpunkt abgelesen. Die Gerätezeitzone kann sich jedoch von der Vorrichtungszeitzone unterscheiden. Um eine Zuordnung der beiden Uhrenstände zueinander zu ermöglichen, ist es vorgesehen, dass die Kommunikationsvorrichtung dazu eingerichtet ist, durch die empfangende Sende-Empfängereinheit einen Synchronisationsdatensatz zu generieren, der eine Zeitrelation zwischen einem Vorrichtungsuhrenstand zu dem Referenzzeitpunkt in der Vorrichtungszeitzone und dem Geräteuhrenstand zu dem Referenzzeitpunkt in der Gerätezeitzone beschreibt. Mit anderen Worten ist die Sende-Empfängereinheit dazu eingerichtet, den Synchronisationsdatensatz zu erstellen, welcher eine Zuordnung der Gerätezeitzone zu der Vorrichtungszeitzone ermöglicht. Zu diesem Zweck weist der Synchronisationsdatensatz die Zeitrelation auf, welche den Vorrichtungsuhrenstand, welcher durch die Vorrichtungsuhr in der Vorrichtungszeitzone zu dem Referenzzeitpunkt aufweist, umfasst, und diesen den Geräteuhrenstand der Gerätezeitzone zuordnet. Die Kommunikationsvorrichtung ist dazu eingerichtet, durch die empfangende Sende-Empfängereinheit eine Synchronisationssitzung zu initiieren, wobei durch die empfangende Sende-Empfängereinheit ein Synchronisationszeitraster definiert ist, welches einen sich periodisch wiederholenden Synchronisationsblock aufweist. Mit anderen Worten ist die Kommunikationsvorrichtung dazu eingerichtet, mittels der vorbestimmten Synchronisationssitzung den Synchronisationsdatensatz von der generierenden Sende-Empfängereinheit an die anderen der Sende-Empfängereinheiten zu übertragen, wobei die Übertragung in der Synchronisationssitzung erfolgt, welche ein vorbestimmtes Synchronisationszeitraster aufweist. Das Synchronisationszeitraster weist den vorbestimmten Synchronisationsblock auf, welcher in einzelne Sitzungsrunden unterteilt ist. Die Kommunikationsvorrichtung ist dazu vorgesehen, durch die empfangende Sende-Empfängereinheit in dem vorbestimmten Sitzungsslot der Sitzungsrunde des sich periodisch wiederholenden Synchronisationsblocks den Synchronisationsdatensatz an anderen der Sende-Empfängereinheiten zu übertragen. Mit anderen Worten ist es vorgesehen, dass in dem Sitzungsslot, welcher der Sende-Empfängereinheit zugewiesen ist, ein Versand des Synchronisationsdatensatzes durch die Sende-Empfängereinheit an die andere der Sende-Empfängereinheiten durchgeführt wird.

Ein dritter Aspekt der Erfindung betrifft ein Fahrzeug, welches eine Kommunikationsvorrichtung aufweist. Das Fahrzeug kann beispielsweise ein Personenkraftwagen mit einer Verriegelungseinrichtung sein, welche dazu eingerichtet sein kann, eine Tür des Fahrzeugs in Abhängigkeit einer georteten Position einer Geräteeinheit zu entriegeln.

Zu der Erfindung gehören auch Weiterbildungen der erfindungsgemäßen Kommunikationsvorrichtung und des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Kommunikationsvorrichtung und des erfindungsgemäßen Fahrzeugs hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:

Fig. 1 eine schematische Darstellung eines Fahrzeugs, das eine Kommunikationsvorrichtung aufweist;

Fig. 2 eine schematische Darstellung eines Synchronisationszeitrasters und mehrere Abstandsmessungszeitraster für jeweilige Abstandsmessungssitzungen;

Fig. 3 eine schematische Darstellung einer Aufteilung des Synchronisationsrasters;

Fig. 4 eine schematische Darstellung eines möglichen Aufbaus der übermittelten Synchronisationsdatensätze;

Fig. 5 mögliche Übertragungswege zwischen einzelnen der Sende-Empfängereinheiten, wobei direkte Übertragungen zwischen zwei der Sende-Empfängereinheiten erfolgen können;

Fig. 6 eine schematische Darstellung vorhandener Direkt-Verbindungen zwischen den Sende-Empfängereinheiten; und

Fig. 7 eine schematische Darstellung eines Ablaufs der Übertragung der Synchronisationsdatensätze in einem so genannten Relayverfahren.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Geräteeinheit, und die Sende-Empfängereinheiten können eine Recheneinheit aufweisen. Unter einer Recheneinheit kann insbesondere ein Datenverarbeitungsgerät verstanden werden, die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT englisch: "look-up table", durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC englisch: "application-specific integrated circuit", eines oder mehrere feldprogrammierbare Gate-Arrays, FPGA, und/oder eines oder mehrere Einchipsysteme, SoC englisch: "system on a chip".

Die Recheneinheit kann auch einen oder mehrere Prozessoren, beispielsweise einen oder mehrere Mikroprozessoren, eine oder mehrere zentrale Prozessoreinheiten, CPU englisch: "central processing unit", eine oder mehrere Grafikprozessoreinheiten, GPU englisch: "graphics processing unit" und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstelle und/oder eine oder mehrere Speichereinheiten.

Eine Speichereinheit kann als flüchtiger Datenspeicher, beispielsweise als dynamischer Speicher mit wahlfreiem Zugriff, DRAM englisch: "dynamic random access memory" oder statischer Speicher mit wahlfreiem Zugriff, SRAM englisch: "static random access memory", oder als nicht-flüchtiger Datenspeicher, beispielsweise als Festwertspeicher, ROM englisch: "read-only memory", als programmierbarer Festwertspeicher, PROM englisch: "programmable read-only memory", als löschbarer Festwertspeicher, EPROM englisch: "erasable read-only memory", als elektrisch löschbarer Festwertspeicher, EEPROM englisch: "electrically erasable read-only memory", als Flash-Speicher oder Flash-EEPROM, als ferroelektrischer Speicher mit wahlfreiem Zugriff, FRAM englisch: "ferroelectric random access memory", als magnetoresistiver Speicher mit wahlfreiem Zugriff, MRAM englisch: "magnetoresistive random access memory" oder als Phasenänderungsspeicher mit wahlfreiem Zugriff, PCRAM englisch: "phasechange random access memory", ausgestaltet sein.

In den Figuren sind funktionsgleiche Elemente jeweils mit denselben Bezugszeichen versehen.

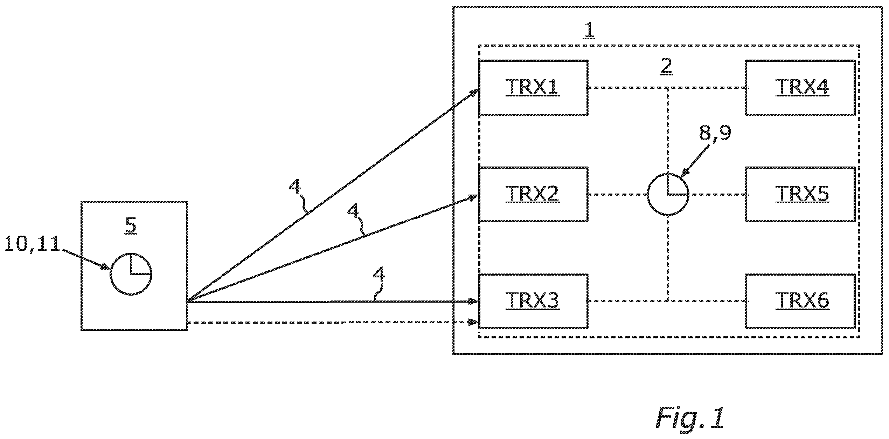

Fig. 1 zeigt eine schematische Darstellung eines Fahrzeugs 1, das eine Kommunikationsvorrichtung 2 aufweist. Die Kommunikationsvorrichtung 2 kann Sende-Empfängereinheiten TRX aufweisen, welche dazu eingerichtet sein können, vorbestimmte Abstandsmessungssignale 4 an eine Geräteeinheit 5 zu versenden und/oder von der Geräteeinheit 5 zu empfangen, um in einer vorbestimmten Abstandsmessungssitzung S einen Abstand zwischen einer jeweiligen Sende-Empfängereinheit TRX und der Geräteeinheit 5 ermitteln zu können. Es kann vorgesehen sein, dass die Abstandsmessungssignale 4 in jeweiligen Abstandsmessungszeitfenstern 6 durch die jeweiligen Sende-Empfängereinheiten TRX versandt und/oder empfangen werden. Die Abstandsmessungszeitfenster 6 können in einem Abstands-messzeitraster der Abstandsmessungssitzung S7 vorgegeben sein. Es kann vorgesehen sein, dass die jeweiligen Sende-Empfängereinheiten TRX nur in ihren jeweiligen Abstandsmessungszeitfenstern 6 des Abstandsmessungszeitrasters 7 auf einen Abstandsmessungsempfangsmodus gestellt sein können, um Energie zu sparen. Zur Ermittlung der Abstandsmessungszeitfenster 6 kann die Kommunikationsvorrichtung 2 eine Vorrichtungsuhr 8 aufweisen, welche eine Vorrichtungszeitzone 9 vorgeben kann. Die Vorrichtungsuhr 8 kann beispielsweise als Quarzuhr eingerichtet sein. Die einzelnen Sende-Empfängereinheiten TRX können mit der Vorrichtungsuhr 8 synchronisiert sein und somit in derselben Vorrichtungszeitzone 9 arbeiten. Die Geräteeinheit 5 kann eine Geräteuhr 10 aufweisen, welche eine Gerätezeitzone 11, 14 vorgeben kann. Damit ein Aussenden eines Abstandsmessungssignals 4 durch die Geräteeinheit 5 und ein Empfangen des Abstandsmessungssignals 4 durch die jeweilige Sende-Empfängereinheit TRX in dem ihr zugeordneten Abstandsmessungszeitfenster 6 erfolgen kann, kann es erforderlich sein, dass die Geräteeinheit 5 mit den Sende-Empfängereinheiten TRX 4 synchronisiert ist. Dabei kann sich das Problem ergeben, dass zwischen der Gerätezeitzone 11, 14 der Geräteeinheit 5 und der Vorrichtungszeitzone 9 der Kommunikationsvorrichtung 2 ein Zeitunterschied bestehen kann, der sich aus unterschiedlichen Laufzeiten der Quarzkristalle der Geräteuhr 10 und der Vorrichtungsuhr 8 ergeben kann. Um eine Synchronisation zwischen der Kommunikationseinrichtung und der Geräteeinheit 5 aufrecht halten zu können, kann es somit erforderlich sein, dass regelmäßige Synchronisationen zwischen der Kommunikationsvorrichtung 2 und der Geräteeinheit 5 erfolgen. Nach dem Stand der Technik ist es vorgesehen, dass hierfür ein Zeitsignal 12 durch die Geräteeinheit 5 an eine als Master-Sende-Empfängereinheit TRX wirkende Sende-Empfängereinheit TRX4 versandt wird. Das Zeitsignal 12 kann einen Geräteuhrenstand 13 der Geräteuhr 10 der Geräteeinheit 5 zu einem Referenzzeitpunkt T in der Gerätezeitzone 11, 14 umfassen. Die Sende-Empfängereinheit TRX 4 kann das Zeitsignal 12 empfangen und einen Synchronisationsdatensatz 15 generieren, der eine Zeitrelation zwischen dem Vorrichtungsuhrenstand der Vorrichtungsuhr 8 zu dem Referenzzeitpunkt in der Vorrichtungszeitzone 9 und dem Geräteuhrenstand 13 der Geräteuhr 10 zu dem Referenzzeitpunkt in der Gerätezeitzone 11, 14 beschreibt. Dadurch ist eine Angabe des Referenzzeitpunkts in beiden der Zeitzonen möglich. Es kann erforderlich sein, dass die Synchronisationsinformationen in dem Synchronisationsdatensatz 15 an die anderen der Sende-Empfängereinheiten TRX 4 übertragen werden. Dies kann beispielsweise über Funk erfolgen. Hierbei ist jedoch sicherzustellen, dass eine Kollision zwischen Synchronisationszeitfenstern 16 einer Synchronisationssitzung nicht mit den Abstandsmessungszeitfenstern 6 der Abstandsmessungssitzung S kollidieren. Ein weiteres Problem kann sich dadurch ergeben, dass für den Fall, dass mehrere Geräteeinheiten 5 mit der Kommunikationsvorrichtung 2 kommunizieren, ein unnötig hoher Anstieg einer Datenmenge zur Synchronisation der einzelnen Sende-Empfängereinheiten TRX vermieden werden muss.

Es ist daher vorgesehen, dass durch die Master-Sende-Empfängereinheit TRX der Sende-Empfängereinheiten TRX die Synchronisationssitzung initiiert wird. Dabei wird durch die Master-Sende-Empfängereinheit TRX ein Synchronisationszeitraster 17 definiert, welches einen sich periodisch wiederholenden Synchronisationsblock 18 aufweist. Der Synchronisationsblock 18 weist selbst eine Sitzungsrunde 19 auf, in der Sitzungsslots 20 angeordnet sind, wobei ein jeweiliger der Sitzungsslots 20 einer jeweiligen Sende-Empfängereinheit TRX zugewiesen sind. Es ist vorgesehen, dass in den jeweiligen Sitzungsslots 20 durch die Sende-Empfängereinheiten TRX die Synchronisationszeitfenster vorgegeben sind, in denen die jeweiligen Synchronisationsdatensätze 15 versandt werden und die Sende-Empfängereinheiten TRX in einen Synchronisationsempfangsmodus zum Empfangen der Synchronisationsdatensätze 15 gesetzt sind.

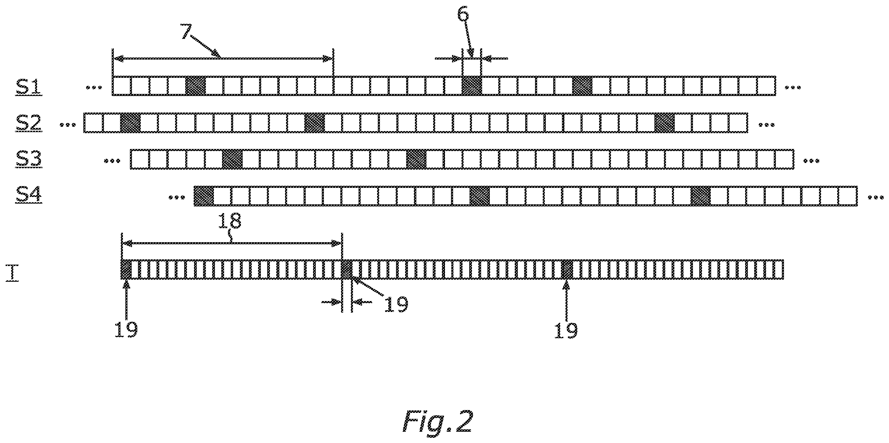

Fig. 2 zeigt eine schematische Darstellung eines Synchronisationszeitrasters 17 und mehrere Abstandsmessungszeitraster für jeweilige Abstandsmessungssitzungen S. Gezeigt sind die, durch die jeweiligen Geräteeinheiten 5 definierten Abstandsmessungszeitraster "UWB Device Time", durch welche die Abstandsmessungszeitfenster 6 definiert sind, in denen während der Abstandsmessungssitzungen S zwischen der jeweiligen Geräteeinheit 5 und der Kommunikationsvorrichtung 2 des Fahrzeugs 1 Abstandsmessungssignale 4 ausgetauscht werden können und die Sende-Empfängereinheiten TRX in einen Abstandsmessungsempfangsmodus gesetzt sein können. Zusätzlich ist das von der Master-Sende-Empfängereinheit TRX definierte Synchronisationszeitraster 17 "Vehicle time", auf das alle Sende-Empfängereinheiten TRX synchronisiert sind, gezeigt. Die Abstandsmessungssitzungen S S1 bis S4 können einer jeweiligen Geräteeinheit 5 zugewiesen sein. Ein Abstandsmessungszeitraster einer jeweiligen der Abstandsmessungssitzungen S kann dabei durch die Gerätezeitzone 11, 14 der jeweiligen Geräteeinheit 5 vorgegeben sein. Die Abstandsmessungszeitraster der jeweiligen Abstandsmessungssitzungen S können vorbestimmte Blöcke aufweisen, die eine jeweilige vorbestimmte Dauer aufweisen können. Innerhalb eines Blocks kann eine jeweilige Runde angeordnet sein, in der eine Abstandsmessung zwischen der jeweiligen Geräteeinheit 5 und den einzelnen Sende-Empfängereinheiten TRX durch einen Austausch von Abstandsmessungssignalen 4 erfolgen kann. Für jede zusätzliche Geräteeinheit 5 kann es erforderlich sein, jeweilige Synchronisationsdatensätze 15 zu generieren, welche durch eine der Sende-Empfängereinheiten TRX an die anderen der Sende-Empfängereinheiten TRX versandt werden muss. Hierfür gilt es, ein Verfahren bereitzustellen, welches eine übermäßige Zunahme der übertragenden Datenmenge und die damit zunehmende Gefahr einer Kollision von Abstandsmessungszeitfenstern 6 verschiedener Abstandsmessungssitzungen S mit Synchronisationszeitfenstern 16 vermeidet. Es ist daher vorgesehen, die vorbestimmte Synchronisationssitzung zu initiieren, in welcher die jeweiligen Synchronisationsdatensätze 15, die für die einzelnen Abstandsmessungssitzungen S erforderlich sind, zwischen den Sende-Empfängereinheiten TRX ausgetauscht werden. Das Synchronisationsraster kann dabei durch die Master-Sende-Empfängereinheit TRX vorgegeben sein und eine vorbestimmte Dauer aufweisen. Ein jeweiliger Block kann eine jeweilige Runde aufweisen, in der in jeweiligen Slots durch die einzelnen Sende-Empfängereinheiten TRX die Synchronisationsdatensätze 15 ausgesandt und empfangen werden können. Das Synchronisationszeitraster 17 wird dabei von der Master-Sende-Empfängereinheit TRX vorgegeben. Dabei kann es sich beispielsweise um die Sende-Empfängereinheit TRX handeln, welche die erste Abstandsmessungssitzung S mit einer der Geräteeinheiten 5 eingeleitet hat. Um das Synchronisationszeitraster 17 an die anderen Sende-Empfängereinheiten TRX mitteilen zu können, kann es in einem ersten Schritt vorgesehen sein, dass die anderen Sende-Empfängereinheiten TRX durch die Master-Sende-Empfängereinheit TRX in einen dauerhaften Synchronisationsempfangsmodus gesetzt werden. Während die anderen Sende-Empfängereinheiten TRX sich im Synchronisationsempfangsmodus befinden, kann durch die Master-Sende-Empfängereinheit TRX der erste Synchronisationsdatensatz 15 an die einzelnen Sende-Empfängereinheiten TRX versandt werden. Da jeder der Sende-Empfängereinheiten TRX ein vorbestimmter Synchronisationsslot des Synchronisationszeitrasters 17 zugewiesen ist, können die Sende-Empfängereinheiten TRX aus einem Zeitpunkt eines Empfangs des ersten Synchronisationsdatensatzes 15 das Synchronisationszeitrasterermitteln und somit die zukünftigen Empfangszeitpunkte bestimmen. Nach dem Empfang des ersten Synchronisationsdatensatzes 15 können die einzelnen Sende-Empfängereinheiten TRX während der jeweiligen Sitzungsslots 20 in den Synchronisationsempfangsmodus gehen und in einer übrigen den Synchronisationsempfangsmodus deaktivieren.

Die Idee betrifft die fahrzeuginterne Weitergabe der Synchronisations-Information "vehicle internal sync", die eine auch als Anker "Anchor" bekannte Sende-Empfängereinheit TRX entweder über den Empfang eines UWB Pakets erhält, oder durch das "BLE Timesync" genannte Verfahren. Beide Mechanismen sind in der CCC Spezifikation beschrieben und geben dem Anker Rückschluss auf die aktuelle Zeit "UWBDeviceTime" in der Zeitzone des Smartphone "Device".

Ein Ziel des Verfahrens ist es, eine lokale zeitliche Synchronisations-Information in einen Synchronisationsdatensatz 15 zu übertragen, der zeitunkritisch zu anderen Sende-Empfängereinheiten TRX übertragen werden kann. Der Synchronisationsdatensatz 15 kann Datentupel aufweisen, die dem Geräteuhrenstand 13 "Clock State" der Gerätezeitzone 11, 14 "UWB Device Time" einen Vorrichtungsuhrenstand der Vorrichtungszeitzone 9 "Vehicle Time" zuordnen. Der Synchronisationsdatensatz 15 kann auch ergänzende Information umfassen. Diese ergänzenden Informationen können einen Ungenauigkeitswert Uncertainty, und einen Quellenwert S ID umfassen. Der Quellenwert S ID kann die Sende-Empfängereinheit TRX, welcher den Synchronisationsdatensatz 15 generiert hat Source.

Es ist vorgesehen, dass alle Sende-Empfängereinheiten TRX der Kommunikationsvorrichtung 2 mit der Vorrichtungsuhr 8 der der Kommunikationsvorrichtung 2 synchronisiert sind. Die Sende-Empfängereinheiten TRX können somit der durch die Vorrichtungsuhr 8 definierten Vorrichtungszeitzone 9 zugewiesen sein. Die Vorrichtungsuhr 8 kann von einer Steuereinheit über ein Bussystem synchronisiert werden oder durch eine UWB Session der Sende-Empfängereinheiten TRX. Eine Sende-Empfängereinheit TRX hat demnach zwei als Clock-Master wirkende Uhren: die Geräteuhr 10 Device Clock und die Vorrichtungsuhr 8 Vehicle Clock. Jeder beliebige Zeitpunkt t lässt sich durch einen Uhrenstand Clock State in den beiden Zeitzonen darstellen: C_Devicet, C_Vehiclet. Eine Verteilung des Synchronisationsdatensatzes 15 von der erstellenden Sende-Empfängereinheit TRX auf alle anderen Sende-Empfängereinheiten TRX kann über ein Bussystem, beispielsweise dem CAN-Bus erfolgen. Dies kann beispielsweise über eine direkte Verteilung oder eine zentrale Verteilung durch über ein Steuergerät eines Fahrzeugs 1 ECU erfolgen. Eine weitere Möglichkeit besteht in einer funkbasierten Verteilung über UWB "UWB Timesync" oder über andere Relay-Channel wie BLE oder WLAN. Bei der Verteilung kann eine zyklische Aktualisierung des Synchronisationsdatensatzes 15 vorgesehen sein.

Das Format des Synchronisationsdatensatzes 15 kann durch Weglassen redundanter oder implizit vorhandener Informationen komprimiert werden. Der Synchronisationsdatensatz 15 kann beispielsweise die Relation zwischen den Uhrenständen als Differenz "Offset" zwischen dem Uhrenstand der Geräteuhr 10 und dem Uhrenstand der Vorrichtungsuhr 8 angeben:

$$OffsetV\text{-}Dt = C\_Vehiclet - C\_Devicet$$

Der Uhrenstand der Geräteuhr 10 kann über ein Abstandsmessungszeitraster der Abstandsmessungssitzung S MAC-Grid dargestellt werden. Hierbei kann eine Umrechnung des Zeitpunkts auf eine feste Referenz des MAC-Grid Block oder Round-Ebene erfolgen. Dabei können die MAC-Grid Grössen des Abstandsmessungszeitrasters der Abstandsmessungssitzung S anstatt einer Zeit übertragen werden. Es kann vorgesehen sein, dass ein Nicht synchronisierter Anker einen vorhandenen Synchronisationsdatensatz 15 für einen aktuellen Geräteuhrenstand 13 extrapoliert.

Es kann beispielsweise ein Synchronisationsdatensatz 15 vorliegen, der den Vorrichtungsuhrenstand dem Geräteuhrenstand 13 zu einem Zeitpunkt t1 zuordnet. Wird ein Geräteuhrenstand 13 für einen späteren Zeitpunkt t2 benötigt, kann dieser durch die folgende Formel berechnet werden.

$$C\_Devicet2 = [C\_Vehiclet2 - C\_Vehiclet1 ] * C\_Devicet1 * Clock\_skew$$

Es kann vorgesehen sein, dass eine Berechnung eines Unsicherheitsbereichs auf Grundlage des Ungenauigkeitswertes "Uncertainty" erfolgt. Dabei oder stattdessen können ungünstigste Annahmen worstcase für den relativen Gangunterschied "Clock_skew" zwischen der Geräteuhr 10 und der Vorrichtungsuhr 8 angenommen werden. Eine Schätzung des relativen Gangunterschieds zwischen der Geräteuhr 10 und der Vorrichtungsuhr 8 kann auf Basis mehrerer Synchronisationsdatensätze 15 erfolgen. Der Synchronisationsdatensatz 15 kann über den CAN-Bus verteilt werden.

Eine andere Möglichkeit besteht darin, die Synchronisationsdatensätze 15 über UWB zu übertragen "UWB-Timesync".

Hierbei kann eine separate Synchronisationssitzung initiiert werden, welche eine Verteilung der Synchronisationsdatensätze 15 aller Abstandsmessungssitzungen S bündeln kann. Es kann somit vorgesehen sein, dass die Synchronisationssitzung zusätzlich zu den Abstandsmessungssitzungen S initiiert wird. Die Synchronisationssitzung T kann das eigene Synchronisationszeitraster 17 aufweisen, in welchem die Sende-Empfängereinheiten TRX die Synchronisationsdatensätze 15 austauschen. In dieser Synchronisationssitzung können die Synchronisationsdatensätze 15 verschiedener Abstandsmessungssitzungen S ausgetauscht werden. Eine Abstandsmessungssitzung S kann für eine jeweilige Geräteeinheit 5 bestehen, die durch die Kommunikationsvorrichtung 2 geortet werden soll. Das Synchronisationszeitraster 17 der Synchronisationssitzung kann unabhängig von den Abstandsmessungszeitrastern der Abstandsmessungssitzungen S gewählt sein.

Zur Einleitung der Synchronisationssitzung kann eine der Sende-Empfängereinheiten TRX als Master-Sende-Empfängereinheit TRX festgelegt werden. Dieser definiert das Synchronisationszeitraster 17 MAC Grid der Synchronisationssitzung. Das Synchronisationszeitraster 17 der Synchronisationssitzung kann die Vorrichtungszeitzone 9 als Bezug aufweisen. Im Gegensatz dazu ist das Abstandsmessungszeitraster der Abstandsmessungssitzungen S in Bezug auf die Gerätezeitzone 11, 14 der jeweiligen Gerätezeitzone 11, 14 definiert.

Als Master-Sende-Empfängereinheit TRX kann die Sende-Empfängereinheit TRX bestimmt sein, welche eine erste der Abstandsmessungssitzungen S ausgehandelt hat. Die anderen der Sende-Empfängereinheiten TRX übernehmen das von der Master-Sende-Empfängereinheit TRX definierte Synchronisationszeitraster 17 und sind sogenannte Slave-Sende-Empfängereinheiten TRX. Die Slave-Sende-Empfängereinheiten TRX senden in den jeweiligen, ihnen zugewiesenen Zeitschlitzen. Eine Sendereihenfolge der Sende-Empfängereinheit TRX kann vorab in der Kommunikationsvorrichtung 2 definiert sein oder dynamisch bei der Initialisierung der Synchronisationssitzung durch die Master-Sende-Empfängereinheit TRX festgelegt werden. Die Initialisierung der Synchronisationssitzung kann in Zusammenhang mit der ersten Abstandsmessungssitzung S erfolgen. Für die Synchronisationssitzung können die gleichen Parameter der Bitübertragungsschicht Physical Layer verwendet werden, die auch für die Abstandsmessungssitzung S verwendet werden. Die Master-Sende-Empfängereinheit TRX kann das Synchronisationszeitraster 17 MAC Grid unter Berücksichtigung des Anfangs der Abstandsmessungssitzung S starten. Die Sende-Empfängereinheiten TRX, die Slave-Master-Sende-Empfängereinheiten TRX sind, wechseln zu Beginn der Synchronisationssitzung in einen Dauer-Synchronisationsempfangsmodus "Scanning", bis sie den ersten Synchronisationsdatensatz 15 der Synchronisationssitzung von der Master-Sende-Empfängereinheit TRX empfangen. Mit dem Empfang können die Slave-Master-Sende-Empfängereinheiten TRX das Synchronisationszeitraster 17 der Synchronisationssitzung ermitteln. In der Synchronisationssitzung kann eine periodische Aussendung der aktuellsten Synchronisationsdatensätze 15 aller Abstandsmessungssitzungen S erfolgen. Jede der Sende-Empfängereinheiten TRX kann eine eigene Tabelle mit Synchronisationsdatensätzen 15 verwalten, die durch neue Synchronisationsdatensätze 15 aktualisiert werden kann. Die neuen Synchronisationsdatensätze 15 können solche sein, die durch die Sende-Empfängereinheit TRX selbst generiert wurden oder von einer anderen der Sende-Empfängereinheiten TRX empfangen wurden. Jede der Sende-Empfängereinheiten TRX kann bei neuen Synchronisationsdatensätzen 15 auf Basis des Unsicherheitswertes U ermitteln, ob die neue Synchronisationsdatensätze 15 zuverlässiger ist als der vorliegende Synchronisationsdatensatz 15.

Die Sende-Empfängereinheiten TRX können als Relay- Sende-Empfängereinheiten TRX wirken, und empfangene Synchronisationsdatensätze 15 an andere der Sende-Empfängereinheiten TRX weiterreichen.

Jede der Sende-Empfängereinheiten TRX sendet in dem Synchronisationszeitslot des Synchronisationszeitrasters 17, der ihm zugewiesen ist. Dies kann auch erfolgen, wenn die Master-Sende-Empfängereinheit TRX nicht direkt empfangen werden kann. Jede der Sende-Empfängereinheiten TRX kann die Qualität ihres zur Verfügung stehenden Synchronisationszeitrasters 17 der Synchronisationssitzung, das bei Empfang eines Synchronisationssitzung Pakets aktualisiert wird, ermitteln.

Die Qualität des der Sende-Empfängereinheit TRX zur Verfügung stehenden Synchronisationszeitrasters 17 der Synchronisationssitzung wird beschrieben durch die verstrichene Zeitdauer seit dem Empfang des letzten bekannten Synchronisationsdatensatzes 15 der Master-Sende-Empfängereinheit TRX, sowie der Anzahl der Relay-Sende-Empfängereinheiten TRX, welche den Synchronisationsdatensatz 15 von der Master-Sende-Empfängereinheit TRX weitergeleitet haben. Ein in einer jeweiligen Sende-Empfängereinheit TRX gespeichertes Synchronisationssitzungsprotokoll oder ein jeweiliger Synchronisationsdatensatz 15 kann Informationen über die Qualität des Synchronisationszeitrasters 17 der Synchronisationssitzung und einen Alterswert einer Dauer seit einem letzten Empfang von der Master-Sende-Empfängereinheit TRX "Timesync Grid Age" umfassen. Der Synchronisationsdatensatz 15 kann auch einen Relayszähler umfassen. Dieser kann eine Anzahl der Relay-Sende-Empfängereinheiten TRX angeben, und beschreiben, über wie viele Relay-Sende-Empfängereinheiten TRX der Synchronisationsdatensatz 15 seit der Aussendung durch die Master-Sende-Empfängereinheit TRX weitergeleitet wurde "Relay Counter".

Eine Slave-Sende-Empfängereinheit TRX kann eine periodische Aussendung der Synchronisationsdatensätze 15 beenden, wenn für eine vorab festgelegte Dauer kein anderer Synchronisationsdatensatz 15 der Synchronisationssitzung empfangen wurde, oder der Alterswert des Synchronisationszeitrasters 17 einen vorab festgelegten Wert übersteigt.

Die Master-Sende-Empfängereinheit TRX kann die Synchronisationssitzung beenden, wenn alle Abstandsmessungssitzungen S beendet sind oder die Geräteeinheit 5 für eine vorab festgelegte Zeit nicht mehr empfangen wurde Timeout.

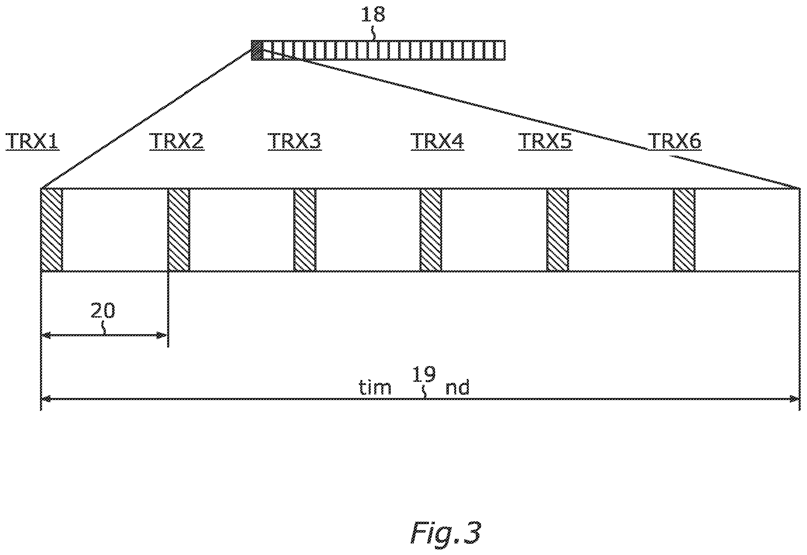

Fig. 3 zeigt eine schematische Darstellung einer Aufteilung des Synchronisationsrasters. Gezeigt wird ein Synchronisationsblock 18 des Synchronisationsrasters, welcher mehrere Synchronisationsrunden aufweisen kann. Eine der Synchronisationsrunden weist mehrere Synchronisationsslots auf, wobei ein jeweiliger Synchronisationsslot einer jeweiligen Sende-Empfängereinheit TRX zugewiesen sein kann. Eine Reihenfolge der Synchronisationsslots und die Zuordnung der Sende-Empfängereinheiten TRX kann vorab bestimmt sein. Eine Synchronisationsrunde kann eine Übermittlung von Synchronisationsdatensätzen 15 umfassen, die zeitliche Beziehungen zwischen Gerätezeitzonen 11, 14 und Vorrichtungszeitzonen 9 aller Abstandsmessungssitzungen S enthalten können.

Die Sende-Empfängereinheit TRX1 kann die Master-Sende-Empfängereinheit TRX der Synchronisationssitzung sein und das Synchronisationszeitraster 17 vorgeben. Eine Bestimmung einer der Sende-Empfängereinheiten TRX als Master-Sende-Empfängereinheit TRX und eine Reihenfolge der Slave-Sende-Empfängereinheiten TRX kann vorab in der Kommunikationsvorrichtung 2 vorgegeben sein, oder kann von Synchronisationssitzung zu Synchronisationssitzung dynamisch zugewiesen werden.

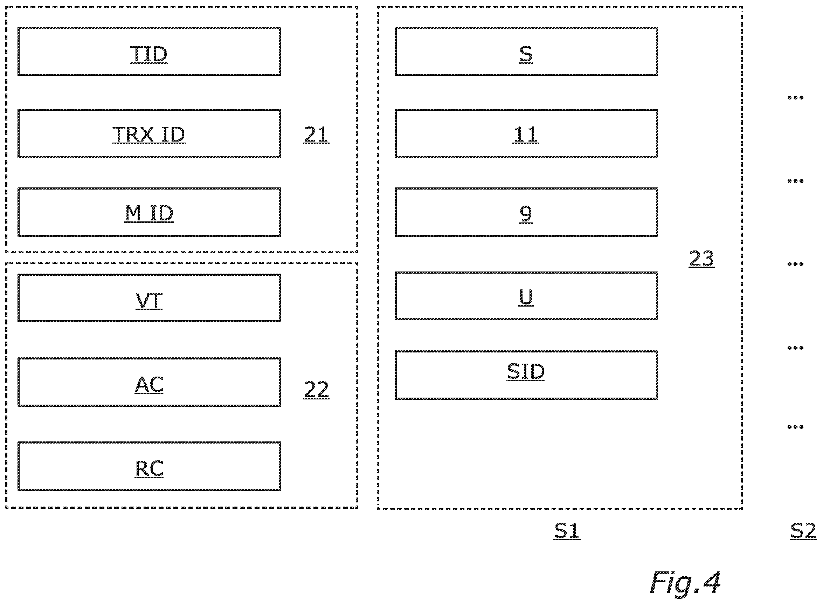

Jede der Sende-Empfängereinheiten TRX versucht, die Synchronisationsdatensätze 15 von allen anderen Sende-Empfängereinheiten TRX zu empfangen, um die aktuellsten Zeitrelationen zu erhalten Fig. 4 zeigt eine schematische Darstellung eines möglichen Aufbaus der übermittelten Synchronisationsdatensätze 15.

Ein Synchronisationsdatensatz 15 kann die Zeitrelationen pro Abstandsmessungssitzung S, sowie Informationen über den Timesync Layer für die fahrzeugseitige Synchronisation der Vorrichtungsuhr 8 umfassen.

Das Format der Zeitrelationen kann angepasst werden, um die Größe der Quelldaten zu optimieren, oder redundante Information wegzulassen. Ein Geräteuhrenstand 13 kann auf Grenzen eines Abstandsmessungssitzungsblocks oder eines Synchronisationssitzungsblocks extrapoliert sein. Es reicht hierbei, muss einen Index des Abstandsmessungssitzungsblocks oder des Synchronisationssitzungsblocks zu übertragen. Geräteuhrenstände 13 und/oder Vorrichtungsuhrenstände mit einer im Vergleich dazu hohen Auflösung müssen hierbei nicht übertragen werden. Es kann vorgesehen sein, dass statt eines Daten-Tupels aus dem Geräteuhrenstand 13 und dem Vorrichtungsuhrenstand nur eine Differenz dieser beiden Werte als Zeitrelation übertragen wird "Offset". Timesync Link Layer Informationen können entfallen, wenn sie durch eine fahrzeugseitige Synchronisation der Sende-Empfängereinheiten TRX mit der Vorrichtungsuhr 8 bereits bekannt sind z.B. Vehicle Clock Synchronisation über CAN-Bus.

Der Synchronisationsdatensatz 15 kann einen Datensatzheader 21, Synchronisationszeitrasterinformationen 22 und Synchronisationsdaten 23 einer Synchronisationssitzung umfassen. Ein Synchronisationsdatensatz 15 für eine bestimmte Sitzung kann beispielsweise einen Bezug auf die jeweilige Sitzung aufweisen. In den Synchronisationsdatensätzen 15 können auch ein aktueller Geräteuhrenstand U T 13 U T der Geräteeinheit 5 und ein aktueller Vorrichtungsuhrenstand V T V T der Kommunikationsvorrichtung 2 enthalten sein. Ein jeweiliger Synchronisationsdatensatz 15 kann auch einen Unsicherheitswert U U umfassen, welcher beispielsweise Mess- und/oder Schätzungsungenauigkeiten einer aktuellen Zeit umfassen kann. Der Synchronisationsdatensatz 15 kann auch einen Quellenwert S ID S ID umfassen, der die Sende-Empfängereinheit TRX identifiziert, welche den jeweiligen Datensatz generiert hat. Ein Relayzähler R C R C kann die Anzahl der Relay-Sende-Empfängereinheiten TRX angeben, welche den Synchronisationsdatensatz 15 weitergeleitet haben. Ein Wert S kann die Abstandsmessungssitzung S bestimmen. Eine Synchronisationssitzungsidentifikation T ID T ID kann die Synchronisationssitzung identifizieren. Ein Alterswert A C kann ein alter A C des Synchronisationsdatensatzes 15 angeben. Eine Master-Sende-Empfängereinheitidentifikation M ID kann die Master-Sende-Empfängereinheit TRX der Synchronisationssitzung angeben.

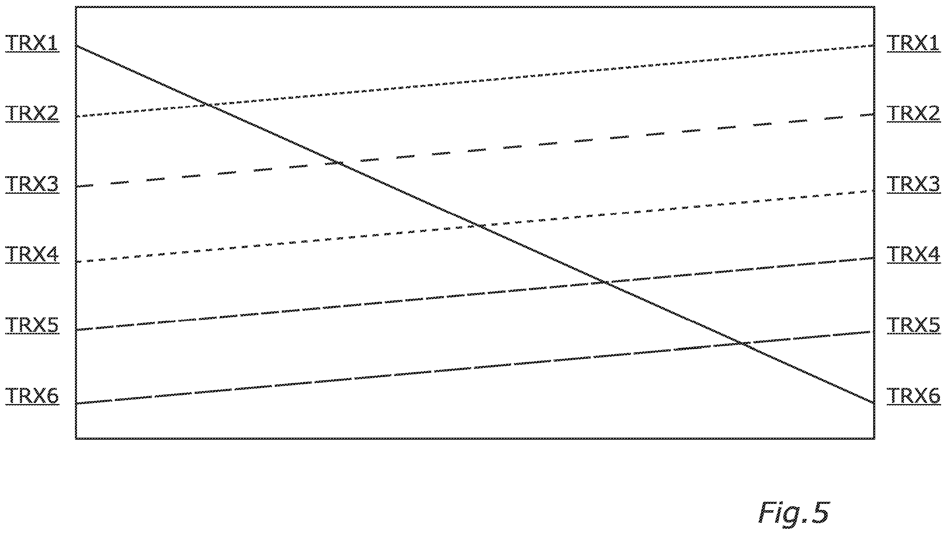

Fig. 5 zeigt mögliche Übertragungswege zwischen einzelnen der Sende-Empfängereinheiten TRX, wobei direkte Übertragungen zwischen zwei der Sende-Empfängereinheiten TRX erfolgen können. Findet die Verteilung über UWB oder ein anderes drahtloses Medium statt, so ist nicht garantiert, dass jede der Sende-Empfängereinheiten TRX zu jeder Zeit den Synchronisationsdatensatz 15 einer anderen Sende-Empfängereinheit TRX empfangen kann. Es können Szenarien auftreten, wo ein Synchronisationsdatensatz 15 eine bestimmte Sende-Empfängereinheit TRX nur mit Hilfe der Relay-Funktionalität anderer der Sende-Empfängereinheiten TRX erreicht. Es können hierbei Latenzen bei der Übermittlung auftreten. Im schlechtesten Fall kann eine der Sende-Empfängereinheiten TRX vollständig von den anderen Sende-Empfängereinheiten TRX isoliert "isolated anchor" sein.

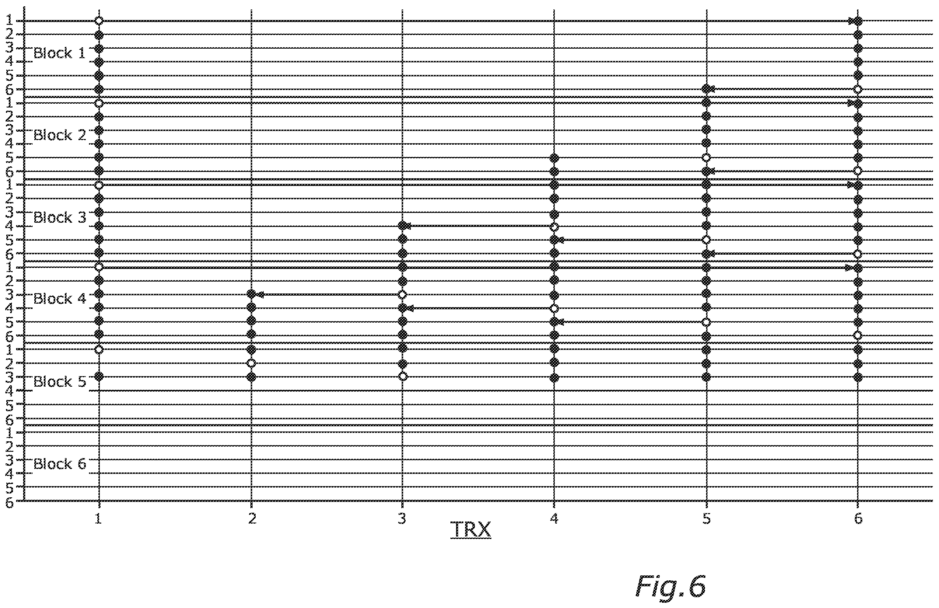

Fig. 6 zeigt eine schematische Darstellung vorhandener Direkt-Verbindungen zwischen den Sende-Empfängereinheiten TRX. Gezeiht ist ein möglicher Spezialfall in welchem jede der Sende-Empfängereinheiten TRX nur über eine Direktverbindung zu einer anderen der Sende-Empfängereinheiten TRX Synchronisationsdatensätze 15 versenden kann.

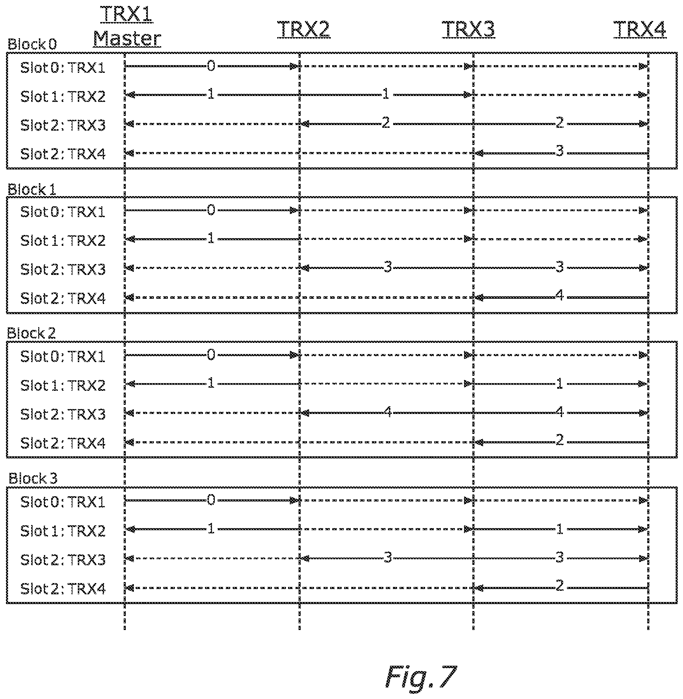

Fig. 7 zeigt eine schematische Darstellung eines Ablaufs der Übertragung der Synchronisationsdatensätze 15 in einem so genannten Relayverfahren. Gezeigt werden Synchronisationsblöcke 18 des Synchronisationsverfahrens und einzelne Synchronisationsslots, wobei in den einzelnen Synchronisationsslots eine jeweilige als Versender wirkende Sende-Empfängereinheit TRX und eine jeweilige als Empfänger eines Synchronisationsdatensatzes 15 wirkende Sende-Empfängereinheit TRX gezeigt werden. Eine auf den Pfeilen dargestellte Ziffer kann den Alterswert eines jeweiligen Datensatzes angeben oder eine Anzahl der erfolgten Umleitungen über Relay-Sende-Empfängereinheiten TRX.

Es kann vorgesehen sein, dass in einem ersten Synchronisationsblock 18 der Synchronisationsdatensatz 15 von einer Sende-Empfängereinheit TRX1 an eine Sende-Empfängereinheit TRX2 übertragen wird. Ein jeweiliger Zähler der Relayweiterleitungen kann hierbei Null betragen. In einem zweiten Slot, welcher der zweiten Sende-Empfängereinheit TRX2 zugewiesen sein kann, kann eine Übertragung des Synchronisationsdatensatzes 15 von der zweiten Sende-Empfängereinheit TRX1 an die dritte Sende-Empfängereinheit TRX3 und die erste Sende-Empfängereinheit TRX1 erfolgen, wodurch der Relayzähler R C den Wert 1 annehmen kann. In einem dritten Slot kann die Sende-Empfängereinheit TRX TR3 den Synchronisationsdatensatz 15 an die Sende-Empfängereinheit TRX2 und die Sende-Empfängereinheit TRX4 übermitteln. In einem vierten Slot kann die Sende-Empfängereinheit TRX4 den Synchronisationsdatensatz 15 an die Sende-Empfängereinheit TRX3 übermitteln.

Im darunter dargestellten Synchronisationssitzungsblock kann eine Verbindung zwischen der Sende-Empfängereinheit TRX2 zur Sende-Empfängereinheit TRX3 unterbrochen sein. Dadurch kann ein erneuter Synchronisationsdatensatz 15 durch die Sende-Empfängereinheit TRX3 nicht empfangen werden. In der Sende-Empfängereinheit TRX3 kann somit ein veralteter Synchronisationsdatensatz 15 gespeichert sein.

In einem dritten Synchronisationssitzungsblock kann weiterhin eine Verbindung zwischen Sende-Empfängereinheit TRX2 und Sende-Empfängereinheit TRX3 unterbrochen sein. In diesem Synchronisationssitzungsblock kann die Sende-Empfängereinheit TRX4 den Synchronisationsdatensatz 15 von Sende-Empfängereinheit TRX2 empfangen.

Insgesamt zeigt das Beispiel, wie Verfahren zur Weitergabe einer Synchronisationsinformation bereitgestellt werden kann.

Bezugszeichenliste

| 1 | Fahrzeug |
| 2 | Kommunikationsvorrichtung |
| TRX | Sende-Empfängereinheit |
| 4 | Abstandsmessungssignal |
| 5 | Geräteeinheit |
| 6 | Abstandsmessungszeitfenster |
| 7 | Abstandsmessungssitzung |
| 8 | Vorrichtungsuhr |
| 9 | Vorrichtungszeitzone |
| 10 | Geräteuhr |
| 11 | Gerätezeitzone |
| 12 | Zeitsignal |
| 13 | Geräteuhrenstand |
| 15 | Synchronisationsdatensatz |
| 16 | Synchronisationszeitfenster |
| 17 | Synchronisationszeitraster |
| 18 | Synchronisationsblock |
| 19 | Sitzungsrunde |
| 20 | Sitzungsslot |
| 21 | Datensatzheader |
| 22 | Synchronisationszeitrasterinformationen |
| 23 | Synchronisationsdaten einer Synchronisationssitzung |
| R C | Relayzähler |
| A C | Alterswert |
| V T | Aktueller Vorrichtungsuhrenstand |
| T ID | Synchronisationssitzungsidentifikation |
| M ID | Master-Sende-Empfängereinheitidentifikation |
| U | Unsicherheitswert |
| U T | Aktueller Geräteuhrenstand |
| S ID | Quellenwert |
| S | Abstandsmessungssitzung |

**Patentansprüche**

**1.** Verfahren zur Weitergabe einer Synchronisationsinformation in einer Kommunikationsvorrichtung (2), aufweisend zumindest zwei Sende-Empfängereinheiten (TRX), wobei

- die zumindest zwei Sende-Empfängereinheiten (TRX) durch ein vorbestimmtes Synchronisationsverfahren mit einer Vorrichtungsuhr (8) der Kommunikationsvorrichtung (2) auf eine Vorrichtungszeitzone (9) synchronisiert werden,
- durch eine der Sende-Empfängereinheiten (TRX) in jeweiligen vorbestimmten Abstandsmessungssitzungen (7, S) ein Zeitsignal (12) einer externen Geräteeinheit (5) empfangen wird, welches einen Geräteuhrenstand (13) der Geräteeinheit (5) zu einem Referenzzeitpunkt in einer Gerätezeitzone (11, 14) umfasst, **dadurch gekennzeichnet, dass**
- zu jeder der Abstandsmessungssitzungen (7, S) durch die empfangende Sende-Empfängereinheit (TRX) ein Synchronisationsdatensatz (15) generiert wird, der eine Zeitrelation zwischen einem Vorrichtungsuhrenstand zu dem Referenzzeitpunkt in der Vorrichtungszeitzone (9) und dem Geräteuhrenstand (13) zu dem Referenzzeitpunkt in der Gerätezeitzone (11, 14) beschreibt,
- durch die empfangende Sende-Empfängereinheit (TRX) eine Synchronisationssitzung initiiert wird, in welcher durch die empfangende Sende-Empfängereinheit (TRX) ein Synchronisationszeitraster (17) definiert wird, in welchem sich ein Synchronisationsblock (18) periodisch wiederholt, in welchem eine Sitzungsrunde (19) stattfindet,
- durch die empfangende Sende-Empfängereinheit (TRX) in einem vorbestimmten Sitzungsslot (20) der jeweiligen Sitzungsrunde (19) des sich periodisch wiederholenden Synchronisationsblocks (18) der jeweils aktuelle Synchronisationsdatensatz (15) an die anderen der Sende-Empfängereinheiten (TRX) übertragen wird.

**2.** Verfahren nach Anspruch 1,
**dadurch gekennzeichnet, dass**

- die zumindest eine weitere der Sende-Empfängereinheiten (TRX) durch die empfangende Sende-Empfängereinheit (TRX) bei der Einleitung der Synchronisationssitzung auf einen Empfangsmodus gesetzt wird, um einen ersten Synchronisationsdatensatz (15) zu empfangen,

- der erste Synchronisationsdatensatz (15) durch die zumindest eine weitere der Sende-Empfängereinheiten (TRX) in dem vorbestimmten Sitzungsslot (20) der Sitzungsrunde (19) des sich periodisch wiederholenden Synchronisationsblocks (18) empfangen wird,

- durch die zumindest eine weitere der Sende-Empfängereinheiten (TRX) nach einem vorbestimmten Abstimmungsverfahren aus dem vorbestimmten Sitzungsslot (20) das Synchronisationszeitraster (17) abgeleitet wird, und ein Zeitpunkt einer nächsten Sitzungsrunde (19) ermittelt wird.

**3.** Verfahren nach Anspruch 2,
**dadurch gekennzeichnet, dass**
durch die zumindest eine weitere der Sende-Empfängereinheiten (TRX) nach dem Empfang des ersten Synchronisationsdatensatzes (15) der Empfangsmodus deaktiviert wird und in einer nächsten Sitzungsrunde (19) des sich periodisch wiederholenden Sitzungsblocks aktiviert wird.

**4.** Verfahren nach Anspruch 3,
**dadurch gekennzeichnet, dass**

durch eine der Sende-Empfängereinheiten (TRX) ein jeweiliges weiteres Zeitsignal (12) einer weiteren externen Geräteeinheit (5) empfangen wird, welches den jeweiligen Geräteuhrenstand (13) der jeweiligen weiteren Geräteeinrichtung zu einem jeweiligen weiteren Referenzzeitpunkt in der Gerätezeitzone (11, 14) umfasst, wobei

- durch die Sende-Empfängereinheit (TRX) ein jeweiliger weiterer Synchronisationsdatensatz (15), generiert wird, der eine jeweilige Zeitrelation zwischen dem Vorrichtungsuhrenstand zu dem jeweiligen weiteren Referenzzeitpunkt in der Vorrichtungszeitzone (9) und dem jeweiligen weiteren Geräteuhrenstand (13) zu dem jeweiligen weiteren Referenzzeitpunkt in der jeweiligen weiteren Gerätezeitzone (11, 14) beschreibt,
- durch die Sende-Empfängereinheit (TRX) in einem vorbestimmten jeweiligen weiteren Sitzungsslot (20) der Sitzungsrunde (19) des sich periodisch wiederholenden Synchronisationsblocks (18) der Synchronisationsdatensatz (15) an die anderen der Sende-Empfängereinheiten (TRX) übertragen wird.

**5.** Verfahren nach einem der vorhergehenden Ansprüche,
**dadurch gekennzeichnet, dass**
in dem Synchronisationsdatensatz (15) der Geräteuhrenstand (13) zu dem Referenzzeitpunkt in der Gerätezeitzone (11, 14) als Blockindex eines zu dem Referenzzeitpunkt beginnenden oder endenden Synchronisationsblocks (18) der Abstandsmessungssitzung (7, S) angegeben wird.

**6.** Verfahren nach einem der vorhergehenden Ansprüche,
**dadurch gekennzeichnet , dass**
der Synchronisationsdatensatz (15) durch eine als Relay-Sende-Empfängereinheit (TRX) wirkende der Sende-Empfängereinheiten (TRX) empfangen wird und durch die als Relay-Sende-Empfängereinheit (TRX) wirkende der Sende-Empfängereinheiten (TRX) an die weitere der Sende-Empfängereinheit (TRX) versandt wird.

**7.** Verfahren nach einem der vorhergehenden Ansprüche,
**dadurch gekennzeichnet, dass**
der Synchronisationsdatensatz (15) einen Alterswertwert (A C) aufweist, wobei durch den Alterswertwert (A C) eine Anzahl der Blöcke, seit der Generierung des Synchronisationsdatensatzes (15) beschrieben wird.

**8.** Verfahren nach Anspruch 7,
**dadurch gekennzeichnet , dass**

ein erneuter Synchronisationsdatensatz (15) durch eine der Sende-Empfängereinheiten (TRX) empfangen wird, der Alterswertwert (A C) des erneuten Synchronisationsdatensatzes (15) mit einem Alterswertwert (A C) eines in der Sende-Empfängereinheit (TRX) gespeicherten Synchronisationsdatensatzes (15) verglichen wird, und der in der Sende-Empfängereinheit (TRX) gespeicherte Synchronisationsdatensatz (15) durch den erneuten Synchronisationsdatensatz (15) überschrieben wird, wenn der Alterswertwert (A C) des erneuten Synchronisationsdatensatzes (15) kleiner ist als der Alterswertwert (A C) des Synchronisationsdatensatzes (15).

9. Kommunikationsvorrichtung (2), aufweisend zumindest zwei Sende-Empfängereinheiten (TRX), wobei

die Kommunikationsvorrichtung (2) dazu eingerichtet ist, die zumindest zwei Sende-Empfängereinheiten (TRX) durch ein vorbestimmtes Synchronisationsverfahren mit einer Vorrichtungsuhr (8) der Kommunikationsvorrichtung (2) auf eine Vorrichtungszeitzone (9) zu synchronisieren,
die Kommunikationsvorrichtung (2) dazu eingerichtet ist, durch eine der Sende-Empfängereinheiten (TRX) in einer vorbestimmten Abstandsmessungssitzung (7, S) ein Zeitsignal (12) einer externen Geräteeinheit (5) zu empfangen, welches einen Geräteuhrenstand (13) der Geräteeinheit (5) zu einem Referenzzeitpunkt in einer Gerätezeitzone (11, 14) umfasst,
**dadurch gekennzeichnet , dass**
die Kommunikationsvorrichtung (2) dazu eingerichtet ist, durch die empfangende Sende-Empfängereinheit (TRX) ein Synchronisationsdatensatz (15), zu generieren, der eine Zeitrelation zwischen einem Vorrichtungsuhrenstand zu dem Referenzzeitpunkt in der Vorrichtungszeitzone (9) und dem Geräteuhrenstand (13) zu dem Referenzzeitpunkt in der Gerätezeitzone (11, 14) beschreibt,

- durch die empfangende Sende-Empfängereinheit (TRX) eine Synchronisationssitzung zu initiieren, wobei durch die empfangende Sende-Empfängereinheit (TRX) ein Synchronisationszeitraster (17) definiert ist, welches einen sich periodisch wiederholenden Synchronisationsblock (18) aufweist, der eine Sitzungsrunde (19) aufweist,
- durch die empfangende Sende-Empfängereinheit (TRX) in einem vorbestimmten Sitzungsslot (20) der Sitzungsrunde (19) des sich periodisch wiederholenden Synchronisationsblocks (18) den Synchronisationsdatensatz (15) an die anderen der Sende-Empfängereinheiten (TRX) zu übertragen.

10. Fahrzeug, umfassend eine Kommunikationsvorrichtung (2) nach Anspruch 9

**Claims**

1. Method for forwarding synchronization information in a communication apparatus (2) having at least two transceiver units (TRX), where

- the at least two transceiver units (TRX) are synchronized to an apparatus time zone (9) by a predetermined synchronization method using an apparatus clock (8) of the communication apparatus (2),
- one of the transceiver units (TRX) receives in respective predetermined ranging sessions (7, S) a time signal (12) from an external device unit (5), which time signal comprises a device clock state (13) of the device unit (5) at a reference time in a device time zone (11, 14), **characterized in that**
- the receiving transceiver unit (TRX) generates at each of the ranging sessions (7, S) a synchronization dataset (15), which describes a time relationship between an apparatus clock state at the reference time in the apparatus time zone (9) and the device clock state (13) at the reference time in the device time zone (11, 14),
- the receiving transceiver unit (TRX) initiates a synchronization session, in which the receiving transceiver unit (TRX) defines a synchronization time grid (17) in which a synchronization block (18) is repeated periodically, in which a session round (19) takes place,
- the receiving transceiver unit (TRX) transfers in a predetermined session slot (20) of the respective session round (19) of the periodically repeating synchronization block (18) the current synchronization dataset (15) to the others of the transceiver units (TRX).

2. Method according to Claim 1,
**characterized in that**

- when the synchronization session is initiated, the receiving transceiver unit (TRX) sets the at least one further transceiver unit of the transceiver units (TRX) to a receive mode in order to receive a first synchronization dataset (15),
- the at least one further transceiver unit of the transceiver units (TRX) receives the first synchronization dataset (15) in the predetermined session slot (20) of the session round (19) of the periodically repeating synchronization block (18),
- the at least one further transceiver unit of the transceiver units (TRX) derives from the predetermined session slot (20) the synchronization time grid (17) according to a predetermined alignment method, and ascertains a time of a next session round (19).

3. Method according to Claim 2,
   **characterized in that**
   the receive mode is deactivated by the at least one further transceiver unit of the transceiver units (TRX) after receiving the first synchronization dataset (15), and is activated in a next session round (19) of the periodically repeating session block.

4. Method according to Claim 3,
   **characterized in that**

   one of the transceiver units (TRX) receives from a further external device unit (5) a respective further time signal (12), which further time signal comprises the respective device clock state (13) of the respective further device unit at a respective further reference time in the device time zone (11, 14),
   where

   - the transceiver unit (TRX) generates a respective further synchronization dataset (15), which describes a respective time relationship between the apparatus clock state at the respective further reference time in the apparatus time zone (9) and the respective further device clock state (13) at the respective further reference time in the respective further device time zone (11, 14),
   - the transceiver unit (TRX) transfers in a predetermined respective further session slot (20) of the session round (19) of the periodically repeating synchronization block (18) the synchronization dataset (15) to the others of the transceiver units (TRX).

5. Method according to one of the preceding claims,
   **characterized in that**
   in the synchronization dataset (15), the device clock state (13) at the reference time in the device time zone (11, 14) is given as a block index of a synchronization block (18) of the ranging session (7, S), which synchronization block starts or ends at the reference time.

6. Method according to one of the preceding claims,
   **characterized in that**
   the synchronization dataset (15) is received by one of the transceiver units (TRX) that is acting as a relay transceiver unit (TRX), and is sent to the further transceiver unit of the transceiver units (TRX) by the transceiver unit of the transceiver units (TRX) that is acting as the relay transceiver unit (TRX).

7. Method according to one of the preceding claims,
   **characterized in that**
   the synchronization dataset (15) has an age value (A C), where the age value (A C) describes the number of blocks since the synchronization dataset (15) was generated.

8. Method according to Claim 7,
   **characterized in that**

   a fresh synchronization dataset (15) is received by one of the transceiver units (TRX),
   the age value (A C) of the fresh synchronization dataset (15) is compared with an age value (A C) of a synchronization dataset (15) stored in the transceiver unit (TRX), and the synchronization dataset (15) stored in the transceiver unit (TRX) is overwritten by the fresh synchronization dataset (15) if the age value (A C) of the fresh synchronization dataset (15) is less than the age value (A C) of the synchronization dataset (15).

9. Communication apparatus (2) having at least two transceiver units (TRX), where

   the communication apparatus (2) is configured to synchronize the at least two transceiver units (TRX) to an apparatus time zone (9) by a predetermined synchronization method using an apparatus clock (8) of the communication apparatus (2),
   the communication apparatus (2) is configured to receive by one of the transceiver units (TRX) in a predetermined ranging session (7, S) a time signal (12) from an external device unit (5), which time signal comprises a device clock state (13) of the device unit (5) at a reference time in a device time zone (11, 14), **characterized in that** the communication apparatus (2) is configured to generate by the receiving transceiver unit (TRX) a synchronization dataset (15), which describes a time relationship between an apparatus clock state at the reference time in the apparatus time zone (9) and the device clock state (13) at the reference time in the device time zone (11, 14),

- to initiate by the receiving transceiver unit (TRX) a synchronization session, in which the receiving transceiver unit (TRX) defines a synchronization time grid (17) which has a periodically repeating synchronization block (18), which has a session round (19),
- to transfer by the receiving transceiver unit (TRX) in a predetermined session slot (20) of the session round (19) of the periodically repeating synchronization block (18) the synchronization dataset (15) to the others of the transceiver units (TRX).

10. Vehicle comprising a communication apparatus (2) according to Claim 9.

**Revendications**

1. Procédé de transfert d'informations de synchronisation dans un dispositif de communication (2), comportant au moins deux unités émettrices-réceptrices (TRX), dans lequel

- lesdites au moins deux unités émettrices-réceptrices (TRX) sont synchronisées par un procédé de synchronisation prédéterminé à l'aide d'une horloge de dispositif (8) du dispositif de communication (2) sur un fuseau horaire de dispositif (9),
- un signal de temps (12) d'une unité d'appareil (5) externe est reçu par l'une des unités émettrices-réceptrices (TRX) lors de sessions de mesure de distance (7, S) respectives prédéterminées, lequel signal de temps comprend un état d'horloge d'appareil (13) de l'unité d'appareil (5) à une heure de référence dans un fuseau horaire d'appareil (11, 14), **caractérisé en ce que**
- pour chacune des sessions de mesure de distance (7, S), l'unité émettrice-réceptrice (TRX) de réception génère un ensemble de données de synchronisation (15) qui décrit une relation temporelle entre un état d'horloge de dispositif à l'heure de référence dans le fuseau horaire de dispositif (9) et l'état d'horloge de dispositif (13) à l'heure de référence dans le fuseau horaire d'appareil (11, 14),
- une session de synchronisation est déclenchée par l'unité émettrice-réceptrice (TRX) de réception, lors de laquelle une trame temporelle de synchronisation (17) est définie par l'unité émettrice-réceptrice (TRX) de réception, laquelle trame temporelle de synchronisation comporte un bloc de synchronisation (18) se répétant périodiquement, lors duquel a lieu un tour de session (19),
- l'ensemble de données de synchronisation (15) respectif actuel est transmis à d'autres des unités émettrices-réceptrices (TRX) par l'unité émettrice-réceptrice (TRX) de réception dans un créneau de session (20) prédéterminé du tour de session (19) respectif du bloc de synchronisation (18) se répétant périodiquement.

2. Procédé selon la revendication 1,
**caractérisé en ce que**

- ladite au moins une autre desdites unités émettrices-réceptrices (TRX) est mise en mode de réception par l'unité émettrice-réceptrice (TRX) de réception lors du démarrage de ladite session de synchronisation, pour recevoir un premier ensemble de données de synchronisation (15),
- le premier ensemble de données de synchronisation (15) est reçu par ladite au moins une autre des unités émettrices-réceptrices (TRX) dans le créneau de session (20) prédéterminé du tour de session (19) du bloc de synchronisation (18) se répétant périodiquement,
- la trame temporelle de synchronisation (17) est déduite par ladite au moins une autre des unités émettrices-réceptrices (TRX) selon un procédé de syntonisation prédéterminé à partir du créneau de session (20) prédéterminé, et une heure d'un tour de session (19) suivant est déterminée.

3. Procédé selon la revendication 2,
**caractérisé en ce que**
le mode de réception est désactivé par ladite au moins une autre des unités émettrices-réceptrices (TRX) après la réception du premier ensemble de données de synchronisation (15) et est activé lors d'un tour de session (19) suivant du bloc de session se répétant périodiquement.

**4.** Procédé selon la revendication 3,
**caractérisé en ce que**

un autre signal de temps (12) respectif d'une autre unité d'appareil (5) externe est reçu par l'une des unités émettrices-réceptrices (TRX), lequel signal de temps comprend l'état d'horloge d'appareil (13) respectif de l'autre dispositif d'appareil respectif à une autre heure de référence respective dans le fuseau horaire d'appareil (11, 14), dans lequel

- un autre ensemble de données de synchronisation (15) respectif est généré par l'unité émettrice-réceptrice (TRX), lequel ensemble décrit une relation temporelle respective entre l'état d'horloge de dispositif à l'autre heure de référence respective dans le fuseau horaire de dispositif (9) et l'autre état d'horloge de dispositif (13) respectif à l'autre heure de référence respective dans l'autre fuseau horaire de dispositif (11, 14) respectif,
- l'ensemble de données de synchronisation (15) est transmis par l'unité émettrice-réceptrice (TRX) à l'autre des unités émettrices-réceptrices (TRX) de réception dans un autre créneau de session (20) respectif prédéterminé du tour de session (19) du bloc de synchronisation (18) se répétant périodiquement.

**5.** Procédé selon l'une quelconque des revendications précédentes,
**caractérisé en ce que**
l'état d'horloge d'appareil (13) à l'heure de référence dans le fuseau horaire d'appareil (11, 14) est spécifié dans l'ensemble de données de synchronisation (15) en tant qu'index de bloc d'un bloc de synchronisation (18), commençant ou se terminant à l'heure de référence, de la session de mesure de distance (7, S).

**6.** Procédé selon l'une quelconque des revendications précédentes,
**caractérisé en ce que**
l'ensemble de données de synchronisation (15) est reçu par l'une des unités émettrices-réceptrices (TRX) fonctionnant en tant qu'unité émettrice-réceptrice (TRX) d'émission relais et est transmis à l'autre des unités émettrices-réceptrices (TRX) par l'une des unités émettrices-réceptrices (TRX) fonctionnant en tant qu'unité émettrice-réceptrice (TRX) d'émission relais.

**7.** Procédé selon l'une quelconque des revendications précédentes,
**caractérisé en ce que**
l'ensemble de données de synchronisation (15) possède une valeur d'âge (A C), un nombre des blocs depuis la génération de l'ensemble de données de synchronisation (15) étant décrit par la valeur d'âge (A C).

**8.** Procédé selon la revendication 7,
**caractérisé en ce que**

un ensemble de données de synchronisation (15) renouvelé est reçu par l'une des unités émettrice-réceptrice (TRX),
la valeur d'âge (A C) de l'ensemble de données de synchronisation (15) renouvelé est comparée à une valeur d'âge (A C) d'un ensemble de données de synchronisation (15) stocké dans l'unité émettrice-réceptrice (TRX), et l'ensemble de données de synchronisation (15) stocké dans l'unité émettrice-réceptrice (TRX) est écrasé par l'ensemble de données de synchronisation (15) renouvelé lorsque la valeur d'âge (A C) de l'ensemble de données de synchronisation (15) renouvelé est inférieure à la valeur d'âge (A C) de l'ensemble de données de synchronisation (15).

**9.** Dispositif de communication (2) comportant au moins deux unités émettrices-réceptrices (TRX), dans lequel

le dispositif de communication (2) est conçu pour synchroniser lesdites au moins deux unités émettrices-réceptrices (TRX) sur un fuseau horaire de dispositif (9) par un procédé de synchronisation prédéterminé avec une horloge de dispositif (8) du dispositif de communication (2),
le dispositif de communication (2) est conçu pour recevoir, au moyen de l'une des unités émettrices-réceptrices (TRX), lors d'une session de mesure de distance (7, S) prédéterminée, un signal de temps (12) d'une unité d'appareil (5) externe, lequel signal de temps comprend un état d'horloge d'appareil (13) de l'unité d'appareil (5) à une heure de référence dans un fuseau horaire d'appareil (11, 14), **caractérisé en ce que**
le dispositif de communication (2) est conçu pour générer, au moyen de l'unité émettrice-réceptrice (TRX) de réception, un ensemble de données de synchronisation (15) qui décrit une relation temporelle entre un état d'horloge de dispositif à l'heure de référence dans le fuseau horaire de dispositif (9) et l'état d'horloge de dispositif (13) à l'heure de référence dans le fuseau horaire de dispositif (11, 14),

- une session de synchronisation est déclenchée par l'unité émettrice-réceptrice (TRX) de réception, une trame temporelle de synchronisation (17) étant définie par l'unité émettrice-réceptrice (TRX) de réception, laquelle trame temporelle de synchronisation comporte un bloc de synchronisation (18) se répétant périodiquement, lequel comporte un tour de session (19),
- pour transmettre à l'autre des unités émettrices-réceptrices (TRX), au moyen de l'unité émettrice-réceptrice (TRX) de réception, dans un créneau de session (20) prédéterminé du tour de session (19) du bloc de synchronisation (18) se répétant périodiquement, l'ensemble de données de synchronisation (15).

**10.** Véhicule comprenant un dispositif de communication (2) selon la revendication 9.

*Fig.1*

*Fig.2*

EP 4 374 514 B1

TRX1  TRX2  TRX3  TRX4  TRX5  TRX6

18

20

tim $^{19}$ nd

*Fig.3*

*Fig.4*

*Fig.5*

*Fig.6*

EP 4 374 514 B1

*Fig.7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007014339 A